# DEMANDE DE BREVET EUROPEEN

(11) **EP 3 660 738 A1**
(43) Date de publication de la demande: **03.06.2020**
(21) Numéro de dépôt: 19212193.7
(22) Date de dépôt: 28.11.2019
(51) Int. Cl.: G06K 9/00

(54) **PROCEDE D'AJUSTEMENT D'UNE DUREE MAXIMALE D'ATTENTE D'ACQUISITION DE CARACTERISTIQUES BIOMETRIQUES ET DISPOSITIF METTANT EN OEUVRE CE PROCEDE**

(30) Priorité: 29.11.2018 FR 1872067
(71) Demandeur: IDEMIA France, 92400 Courbevoie (FR)
(72) Inventeur: AGBODJAN, Têlé, 92400 Courbevoie (FR); MOUROUX, Benoît, 92400 Courbevoie (FR); BOUSQUET, Nicolas, 92400 Courbevoie (FR)
(74) Mandataire: Cabinet Beau de Loménie

(57) **Abrégé**

Ce procédé comporte :
- une étape (F08) de déclenchement d'une horloge sur réception (E02) d'une demande d'acquisition de caractéristiques biométriques ;
- une phase de collecte d'informations (BIO_ON, BIO_OFF, REAC) représentatives, soit :
(i) de la non-acquisition (BIO_OFF) desdites caractéristiques biométriques pendant une durée maximale (T_OUT) comptée à partir dudit déclenchement ; soit
(ii) de la durée (REAC) écoulée entre ledit déclenchement et l'acquisition (BIO_ON) de dites caractéristiques biométriques avant ladite durée maximale (T_OUT) ;et
- sur détection (E35) d'un critère d'ajustement, une étape (E41) d'ajustement de ladite durée maximale (T_OUT) en fonction desdites informations.

## Description

### Domaine Technique

La présente invention se situe dans le domaine des cartes à circuit intégré du type de celles utilisées pour effectuer des transactions bancaires, par exemple conformes au standard ISO7816, et comportant un capteur biométrique.

De telles cartes proposent :
- d'acquérir dans un premier temps (parfois connu sous le nom de « phase d'enregistrement ») une caractéristique biométrique de référence de l'utilisateur ; puis
- lors de l'utilisation effective de la carte (parfois connue sous le nom de « phase d'utilisation »), par exemple pour authentifier l'utilisateur de la carte pour une transaction bancaire, de redemander la caractéristique biométrique de l'utilisateur afin de la comparer avec la caractéristique biométrique de référence de l'utilisateur acquise pendant la phase d'enregistrement.

### Technique antérieure

De telles cartes intègrent une durée d'attente maximale pour permettre à l'utilisateur de présenter sa caractéristique au capteur.

Dans l'état actuel de la technique, cette durée maximale d'attente est fixe et elle est généralement choisie suffisamment longue pour maximiser la qualité de la caractéristique biométrique de référence acquise lors de la phase d'enregistrement.

Cette durée maximale d'attente peut s'avérer trop longue à l'usage lorsque l'utilisateur décide ou n'est pas en mesure de s'authentifier avec le capteur biométrique pour une transaction. Cela peut être le cas notamment lorsque le capteur biométrique est défectueux, s'il porte des gants pour le capteur d'empreinte digitale ou des lunettes pour un capteur d'image de l'iris.

En effet, et de façon connue, tant que l'utilisateur n'a pas présenté sa caractéristique biométrique au capteur, et cela dans la limite de cette durée maximale d'attente, la main n'est pas rendue à l'application à l'initiative de la demande de caractéristique biométrique, par exemple l'application de transaction bancaire.

En cas de non présentation de la caractéristique biométrique dans cette durée maximale d'attente, il est connu par exemple de rejeter la transaction ou de chercher à authentifier l'utilisateur par une autre voie, par exemple par la saisie d'un code personnel (code PIN).

L'invention vise notamment une carte qui ne présente pas les inconvénients précités.

### Exposé de l'invention

A cet effet, l'invention concerne un procédé d'ajustement d'une durée maximale d'attente d'acquisition de caractéristiques biométriques. Ce procédé comporte :
- une étape de déclenchement d'une horloge sur réception d'une demande d'acquisition de caractéristiques biométriques ;
- une phase de collecte d'informations représentatives, soit :
   (i) de la non-acquisition de caractéristiques biométriques pendant une durée maximale comptée à partir du déclenchement ; soit
   (ii) de la durée écoulée entre le déclenchement et l'acquisition de caractéristiques biométriques avant la durée maximale; et
- sur détection d'un critère d'ajustement, une étape d'ajustement de la durée maximale en fonction de ces informations.

Corrélativement, l'invention concerne également un dispositif, ce dispositif comportant :
- des moyens de déclenchement d'une horloge sur réception d'une demande d'acquisition de caractéristiques biométriques ;
- des moyens de collecte d'informations représentatives, soit :
   (i) de la non-acquisition de caractéristiques biométriques pendant une durée maximale comptée à partir du déclenchement ; soit
   (ii) de la durée écoulée entre le déclenchement et l'acquisition de caractéristiques biométriques avant la durée maximale ;
- des moyens de détection d'un critère d'ajustement ; et
- des moyens d'ajustement de la durée maximale en fonction de ces informations.

Dans la présente demande, la notion d'« horloge » est à comprendre au sens large et couvre tout mécanisme de mesure du temps, par exemple un compteur.

Ainsi, et d'une façon générale, l'invention propose d'ajuster la durée maximale d'attente d'acquisition de caractéristiques biométriques en fonction de l'usage de l'utilisateur, et plus précisément en fonction de la réactivité de l'utilisateur à présenter sa caractéristique biométrique au capteur, quand il décide ou est en mesure de l'utiliser.

L'invention peut s'appliquer dans tout type de dispositif dès lors que celui-ci intègre les différents moyens précités, et notamment dans un téléphone mobile, ou dans un ordinateur.

L'invention concerne en particulier un dispositif comportant au moins un processeur configuré pour :
- déclencher une horloge sur réception d'une demande d'acquisition de caractéristiques biométriques ;
- collecter des informations représentatives, soit :
   (i) de la non-acquisition de caractéristiques biométriques pendant une durée maximale comptée à partir du déclenchement ; soit
   (ii) de la durée écoulée entre le déclenchement et l'acquisition de caractéristiques biométriques avant la durée maximale; et
- sur détection d'un critère d'ajustement, ajustement la durée maximale en fonction de ces informations.

Le dispositif selon l'invention peut en particulier être constitué par une carte à circuit intégré comportant:
- un capteur biométrique apte à acquérir une caractéristique biométrique;
- un élément sécurisé ; et
- un module pour extraire des données biométriques à partir d'une caractéristique biométrique et collecter les informations précitées.

La carte 'à circuit intégré selon l'invention peut notamment être ou faire office de carte de transport, de carte d'assurance maladie, de carte d'accès, de carte d'identité, de carte de vote, de permis de conduire ou de carte bancaire.

Par conséquent, dans un mode de réalisation de l'invention, l'élément sécurisé est dédié ou configuré pour stocker des données sensibles (par exemple des données d'identité, des données bancaires) et pour réaliser des transactions impliquant de telles données (transactions bancaires conformes au standard EMV, des transactions pour effectuer un vote électronique, transactions permettant l'accès à des données d'identité de l'élément sécurisé, ...).

Dans un mode de réalisation, l'élément sécurisé peut communiquer avec un lecteur de carte par l'intermédiaire d'une interface de communication par exemple conforme à la norme ISO 7816 (communication à contact) ou aux normes ISO14443 ou NFC/ISO 15693 (communication sans contact).

Dans un mode de réalisation de l'invention, l'élément sécurisé comporte les moyens de détection du critère d'ajustement, les moyens d'ajustement de la durée maximale d'attente et des moyens d'envoi de cette durée maximale d'attente ajustée au module d'extraction de données biométriques.

Ainsi, dans ce mode de réalisation, l'ajustement de la durée maximale d'attente est réalisé par l'élément sécurisé. Dans un mode particulier de réalisation, les informations collectées sont fournies à l'application à l'origine de la demande d'acquisition de caractéristiques biométriques, par exemple à une application de transaction bancaire, et c'est cette application elle-même qui est en charge de l'ajustement de la durée maximale d'attente.

Dans un mode particulier de réalisation, le critère d'ajustement de la durée maximale d'attente est détecté toutes les N dites demandes d'acquisitions de caractéristiques biométriques, où N est un entier supérieur ou égal à 1. Dans ce mode de réalisation, l'ajustement de la durée maximale d'attente est effectué toutes les N demandes d'acquisitions de caractéristiques biométriques. En variante, l'ajustement pourrait être effectuée après chaque demande, par exemple sur les N dernières transactions glissantes.

Différentes stratégies d'ajustement peuvent être mises en œuvre.

Dans un mode particulier de réalisation, l'invention propose d'augmenter la durée maximum d'attente si, pour la majorité des demandes d'acquisition, l'utilisateur n'utilise pas le capteur biométrique dans cette durée.

Par exemple, dans un mode de réalisation, le procédé selon l'invention comporte :
- une étape de comparaison, avec un seuil, d'un nombre d'acquisitions ou d'un nombre de non acquisition de caractéristiques biométriques en réponse à des demandes d'acquisitions de caractéristiques biométriques
- et selon le résultat de la dite comparaison, une étape d'ajustement de la durée maximum d'attente en fonction d'une durée déterminée, des durées écoulées ou desdits nombres.

Par exemple, si le nombre d'acquisitions de caractéristiques biométriques est inférieur au nombre de non acquisitions de caractéristiques biométriques en réponse à un certain nombre de demandes d'acquisitions de caractéristiques biométriques (par exemple le nombre N mentionné ci-dessus), la durée maximum d'attente est augmentée d'une durée déterminée. La durée maximale d'attente peut aussi par exemple être augmentée d'une durée proportionnelle au ratio du nombre de non acquisitions de caractéristiques biométriques sur le nombre d'acquisitions de caractéristiques biométriques.

Dans un autre mode de réalisation, si le nombre d'acquisitions de caractéristiques biométriques est inférieur à un premier seuil, par exemple au nombre de non acquisitions de caractéristiques biométriques, en réponse à un certain nombre de demandes d'acquisitions de caractéristiques biométriques, et si la durée maximum d'attente est supérieure à une durée limite, la durée maximum d'attente est réinitialisée à une durée déterminée.

Ce mode de réalisation permet d'éviter que la durée maximale d'attente ne devienne trop longue si l'utilisateur n'utilise jamais ou que très rarement le capteur biométrique pour s'authentifier.

Dans un mode particulier de réalisation, l'invention propose d'ajuster la durée maximum d'attente pour tenir compte de la réactivité effective de l'utilisateur lorsque, pour une majorité des demandes d'acquisition, l'utilisateur utilise le capteur biométrique.

Par exemple, si le nombre d'acquisitions de caractéristiques biométriques est supérieur ou égal à un deuxième seuil, par exemple au nombre de non acquisitions de caractéristiques biométriques en réponse aux N dites demandes d'acquisitions de caractéristiques biométriques, la durée maximum d'attente est ajustée en fonction des durées utilisées par l'utilisateur pour présenter sa caractéristique biométrique au capteur à chacune de ces acquisitions effectives.

On peut par exemple, utiliser la valeur moyenne, la médiane, un décile et/ou d'un écart type de ces durées effectives.

En variante, si le nombre d'acquisitions de caractéristiques biométriques est supérieur ou égal à un troisième seuil, par exemple au nombre de non acquisitions de caractéristiques biométriques en réponse aux N dites demandes d'acquisitions de caractéristiques biométriques, la durée maximum d'attente est diminuée d'une durée déterminée.

Dans un mode de réalisation, un seul processeur met en œuvre l'invention. Il peut par exemple s'agir du processeur en charge de l'extraction des données biométriques ou du processeur de l'élément sécurisé qui réalise les transactions bancaires.

En conséquence, l'invention vise aussi un programme d'ordinateur sur un support d'informations, ce programme étant susceptible d'être mis en œuvre dans un dispositif ou plus généralement dans un ordinateur, ce programme comportant des instructions adaptées à la mise en œuvre des étapes d'un procédé d'ajustement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

[Fig. 1] représente un dispositif conforme à un mode particulier de réalisation ;
[Fig. 2A] représente sous forme d'organigramme, les principales étapes d'un procédé d'ajustement de durée maximale d'attente d'acquisition conforme à un premier mode particulier de réalisation ;
[Fig. 2B] représente sous forme d'organigramme, les principales étapes d'un procédé d'ajustement de durée maximale d'attente d'acquisition conforme à un deuxième mode particulier de réalisation ; et
[Fig. 3] illustre un exemple d'utilisation du dispositif de la figure 1.

### Description des modes de réalisation

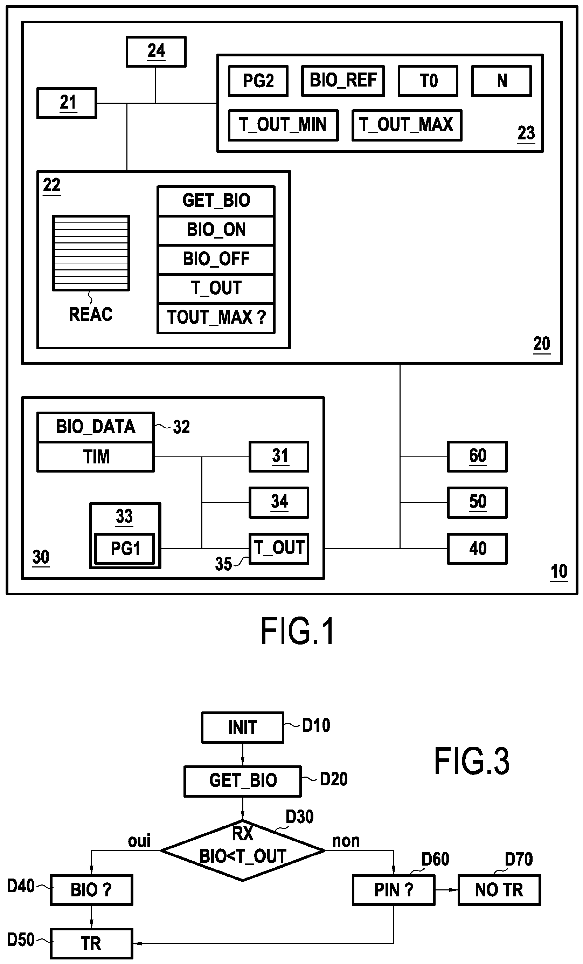

La figure 1 représente un dispositif électronique 10 conforme à un mode particulier de réalisation de l'invention. Ce dispositif 10 est une carte à circuit intégré conforme au standard ISO 7816. Il comporte un capteur biométrique 40, par exemple un capteur d'empreinte digitale, un capteur d'image de l'iris, ou autre caractéristique biométrique.

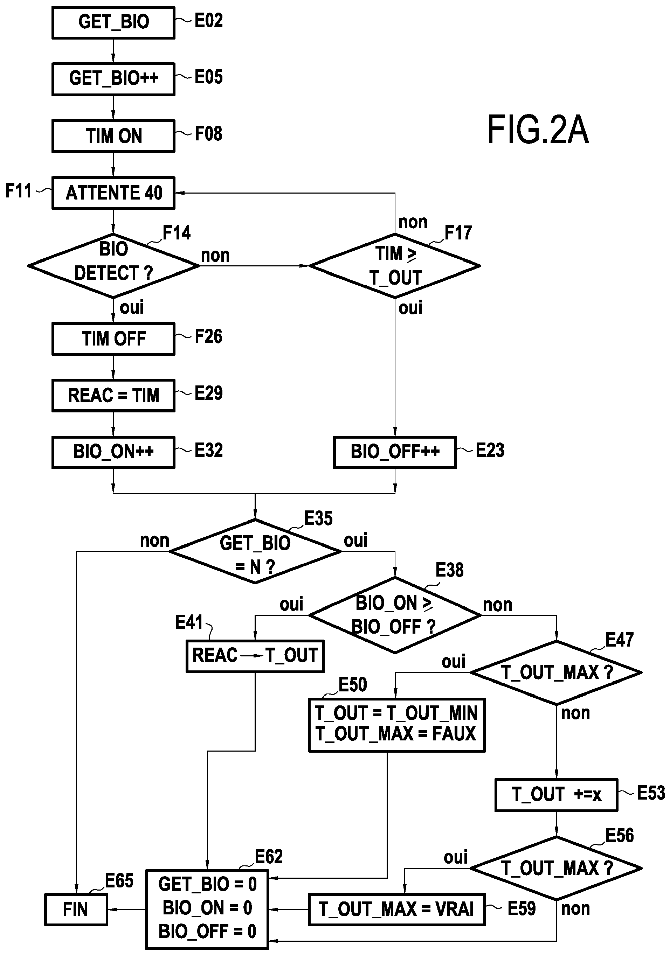

Le dispositif 10 comporte un module 20 configuré pour réaliser des transactions conformes au standard EMV. Le module 20 constitue un élément sécurisé. Il contient notamment un processeur cryptographique 21, une mémoire de stockage 23, une mémoire non volatile réinscriptible de type Flash 22, et une mémoire d'exécution 24. Il contient des clés cryptographiques et des applications personnalisées utilisant ces clés, notamment des applications bancaires permettant d'effectuer des transactions avec des lecteurs de cartes, des terminaux de paiement ou des points de vente. La mémoire de stockage 23 comporte un programme d'ordinateur PG2 comportant des instructions permettant de mettre en œuvre les étapes EXX décrites ultérieurement en référence à la figure 2A. Dans ce mode de réalisation, le mémoire de stockage 23 comporte en outre des données biométriques de référence BIO_REF et le processeur cryptographique est configuré pour comparer ces données biométriques de référence avec des données biométriques BIO_DATA extraites par le module 30 décrit ci-après à partir d'une caractéristique biométrique acquise par le capteur 40.

Conformément à l'invention, le processeur cryptographique 21 est configuré pour ajuster la durée d'attente maximum T_OUT pour l'acquisition d'une caractéristique biométrique par le capteur 40 et pour communiquer cette durée au module 30 décrit ci-après. Il mémorise cette durée dans un registre de la mémoire non volatile de type Flash 22. A l'émission de la carte, cette durée maximale est initialisée à une valeur T0 mémorisée dans la mémoire de stockage 23.

Le dispositif 10 comporte un module 30 configuré pour contrôler le capteur biométrique 40 et extraire des données biométriques BIO_DATA à partir des caractéristiques biométriques reçues du capteur (empreinte digitale, image de l'iris ou autre). Ce module comporte un processeur 31, une mémoire vive de type RAM 32, une mémoire de stockage 33, une mémoire non volatile réinscriptible de type Flash 34 et une horloge 35. La mémoire de stockage mémorise notamment les données biométriques BIO_DATA. La mémoire de stockage 33 comporte un programme d'ordinateur PG1 comportant des instructions permettant de mettre en œuvre les étapes FXX décrites ultérieurement en référence à la figure 2A. La mémoire non volatile de type Flash 34 comporte la durée d'attente maximum T_OUT pour l'acquisition par le capteur 40, reçue du processeur cryptographique 21.

Le dispositif 10 comporte un module de communication 50. Ce module comporte notamment les contacts définis par la norme ISO7816-2. Dans le mode de réalisation décrit ici, ce module comporte un module de communication à champ proche de type NFC.

Dans le mode de réalisation décrit ici, le dispositif 10 comporte en outre un capteur d'activation 60 configuré pour réveiller le module 20 (élément sécurisé configuré pour effectuer les transactions EMV), le module d'acquisition des données biométriques 30, le capteur biométrique 40 et le module de communication 50.

En référence à la figure 2A, nous allons maintenant décrire les principales étapes d'un procédé d'ajustement de la durée maximale T_OUT d'attente d'acquisition de caractéristiques biométriques conforme à un premier mode particulier de réalisation de l'invention. Dans le mode de réalisation décrit ici, les étapes Exx sont exécutées par le processeur cryptographique 21 du module 20 les étapes Fxx sont exécutées par le processeur 31 du module 30 d'extraction des données biométriques.

Au cours d'une étape E02, le processeur cryptographique 21 reçoit une demande d'acquisition de caractéristiques biométriques. Cette demande peut par exemple être déclenchée par une application de transaction EMV lorsque l'utilisateur insère le dispositif 10 dans un lecteur. Le processeur cryptographique incrémente un compteur cyclique GET_BIO, mémorisé dans la mémoire Flash 22 et représentatif du nombre de demandes d'acquisition de caractéristiques biométriques (étape E05). Le processeur cryptographique 21 envoie un signal au module 30.

Sur réception de ce signal, au cours d'une étape F08, le processeur MPU 31 déclenche un timer TIM associé à l'horloge 35. La valeur courante du timer TIM est mémorisée dans la mémoire vive 32.

Au cours d'une boucle constituée par les étapes F11, F14 et F17, le processeur MPU 31 vérifie si des caractéristiques biométriques ont été acquises par le capteur 40 avant que la valeur courante du timer TIM n'atteigne la durée d'attente maximum T_OUT.

Si tel n'est pas le cas, autrement dit si la valeur courante du timer TIM atteint ou dépasse la durée d'attente maximum T_OUT, le résultat du test F17 est positif et le processeur 31 envoie un message au processeur cryptographique 21 pour lui indiquer qu'aucune caractéristique n'a été détectée. Sur réception de ce message, le processeur cryptographique incrémente (étape E23) une variable BIO_OFF représentative de la non-détection d'une caractéristique biométrique, cette variable étant mémorisée dans la mémoire non volatile réinscriptible 22.

Si au contraire, une caractéristique biométrique a été détectée par le capteur biométrique 40 avant que la valeur courante du timer TIM n'atteigne la durée d'attente maximum T_OUT, le résultat du test F14 est positif. Dans ce cas, le processeur 31 arrête le timer TIM (étape F26) et envoie un message au processeur cryptographique 21 pour lui indiquer qu'une caractéristique biométrique a été détectée. Ce message comporte la valeur du timer TIM correspondant au temps de réaction de l'utilisateur pour présenter sa caractéristique biométrique (doigt, iris, ...) au capteur 40. Sur réception de ce message, le processeur cryptographique enregistre (étape E29) ce temps de réaction dans un tableau REAC de la mémoire non volatile réinscriptible 22, et incrémente (étape E32) une variable BIO_ON représentative de la détection d'une caractéristique biométrique, cette variable étant mémorisée dans cette même mémoire.

Par conséquent, la mémoire non volatile réinscriptible 22 du module 20 comporte:
- le compteur cyclique GET_BIO de demandes d'acquisitions de caractéristiques biométriques;
- le nombre BIO_OFF pour lequel l'utilisateur n'a pas présenté de caractéristique biométrique au capteur 40 avant l'expiration de la durée maximum T_OUT ;
- le nombre BIO_ON pour lequel l'utilisateur a présenté une caractéristique biométrique au capteur 40 avant l'expiration de la durée maximum T_OUT, et pour chacune de ces présentations, le temps de réaction mis par l'utilisateur pour présenter cette caractéristique, enregistré dans le tableau REAC.

Nous allons maintenant décrire comment, dans ce mode de réalisation, le processeur cryptographique 21 utilise ces informations pour ajuster la durée d'attente maximum T_OUT pour l'acquisition d'une caractéristique biométrique par le capteur 40.

Dans le mode de réalisation décrit ici, le processeur cryptographique 21 n'envisage un tel ajustement que tous les N demandes d'acquisitions de caractéristiques biométriques, cette variable d'ajustement N étant mémorisée dans la mémoire de stockage 23.

Par conséquent, au cours d'un test E35, le processeur cryptographique 21 vérifie si le compteur cyclique GET_BIO est égal à N. Si tel n'est pas le cas, le résultat du test E35 est négatif et le procédé se termine (étape E65).

Lorsqu'un ajustement de la durée maximum T_OUT doit être envisagé, le résultat du test E35 est positif.

Ce test est alors suivi par un test E38 au cours duquel le processeur cryptographique 21 détermine si le nombre BIO_ON d'acquisitions de caractéristiques biométriques est supérieur ou égal au nombre BIO_OFF de non acquisitions de caractéristiques biométriques.

Si tel est le cas, le résultat du test E38 est positif. Ce test est suivi par une étape E41 au cours de laquelle une nouvelle durée maximum d'attente T_OUT est calculée.

Dans le mode de réalisation décrit ici, la nouvelle durée maximum d'attente T_OUT est calculée à l'étape E41, à partir d'un temps de référence calculé lui-même à partir des temps de réaction de l'utilisateur, mémorisés dans le tableau REAC. Ce temps de référence est par exemple calculé à partir de la valeur moyenne, de la médiane, d'un décile et/ou d'un écart type de la série de valeurs du tableau REAC.

Dans un autre mode de réalisation, la durée maximum d'attente T_OUT est simplement diminuée d'une durée déterminée, par exemple 1 seconde.

Quoiqu'il en soit, la nouvelle valeur de durée maximum d'attente T_OUT est mémorisée dans la mémoire non volatile réinscriptible 22 du module 20 et envoyée au processeur 31 du module 30 pour que celui-ci l'enregistre dans sa mémoire non volatile réinscriptible 35. Les variables GET_BIO, BIO_ON et BIO_OFF sont réinitialisées (étape E62) et le procédé se termine (étape E65).

En référence aux étapes E47 à E59 nous allons maintenant décrire ce qui se passe, dans un mode particulier de réalisation de l'invention, si le processeur cryptographique 21 détermine, au cours du test E38, que le nombre BIO_ON d'acquisitions de caractéristiques biométriques est inférieur au nombre BIO_OFF de non acquisitions de caractéristiques biométriques.

Dans le mode de réalisation décrit ici, la durée maximum d'attente T_OUT doit rester inférieure à une durée limite T_OUT_MAX, cette valeur étant mémorisée dans la mémoire de stockage 23 du module 20. Dans ce mode de réalisation, un indicateur binaire TOUT_MAX?, mémorisé dans la mémoire non volatile réinscriptible 22, indique si la durée maximum d'attente T_OUT a atteint la durée limite T_OUT_MAX.

Au cours d'une étape E47, le processeur cryptographique 21 vérifie si l'indicateur binaire TOUT_MAX? est positionné, autrement dit si la durée maximum d'attente T_OUT a atteint la durée limite T_OUT_MAX.

Si tel n'est pas le cas, on considère que la durée maximale d'attente T_OUT peut être augmentée, et cette valeur est augmentée au cours d'une étape E53. La durée maximale T_OUT peut par exemple être augmentée d'une durée déterminée constante, par exemple 1 seconde, ou d'une durée proportionnelle au ratio entre le nombre de non acquisitions d'empreintes BIO_OFF et un seuil n. Ce seuil n peut par exemple être un seuil prédéterminé, par exemple suite à une campagne d'essais pour optimiser l'ajustement. Ce seuil n peut aussi être le nombre BIO_ON d'acquisitions de caractéristiques biométriques.

Au cours d'une étape E56, le processeur cryptographique vérifie si la nouvelle durée maximale T_OUT dépasse la durée limite T_OUT_MAX (étape E56) et si c'est le cas, il positionne la valeur binaire TOUT_MAX? à « VRAI » (étape E59). Quoiqu'il en soit, la nouvelle valeur de durée maximum d'attente T_OUT est mémorisée dans la mémoire non volatile réinscriptible 22 du module 20 et envoyée au processeur 31 du module 30 pour que celui-ci l'enregistre dans sa mémoire non volatile réinscriptible 35. Les variables GET_BIO, BIO_ON et BIO_OFF sont réinitialisées (étape E62) et le procédé se termine (étape E65).

Si, au cours de l'étape E47, le processeur cryptographique 21 détermine que l'indicateur binaire TOUT_MAX? est positionné, le résultat du test E47 est positif. Ce test est alors suivi par une étape E50 au cours de laquelle la durée maximum d'attente T_OUT est réinitialisée à une durée minimum T_OUT_MIN mémorisée dans la mémoire de stockage 23. Cela permet d'améliorer la réactivité du dispositif 10 pour une personne qui n'utiliserait pas, par exemple, le capteur biométrique. La variable binaire TOUT_MAX? est positionnée à « FAUX ». Quoiqu'il en soit, la nouvelle valeur de durée maximum d'attente T_OUT est mémorisée dans la mémoire non volatile réinscriptible 22 du module 20 et envoyée au processeur 31 du module 30 pour que celui-ci l'enregistre dans sa mémoire non volatile réinscriptible 35. Les variables GET_BIO, BIO_ON et BIO_OFF sont réinitialisées (étape E62) et le procédé se termine (étape E65).

La figure 2A a permis d'expliquer comment la durée maximale d'attente T_OUT pour acquérir des caractéristiques biométriques pouvait être ajustée par le dispositif 10 conformément à l'invention. En variante, les étapes EXX peuvent être exécutées par le processeur 31 du module 30 d'extraction des données biométriques.

En référence à la figure 3, nous allons maintenant décrire comment ce dispositif 10 peut être utilisé.

Au cours d'une étape D10, on suppose que le dispositif 10 est inséré dans un lecteur de carte et que le processeur cryptographique 21 demande l'acquisition d'une empreinte digitale au cours d'une étape D20.

Si l'utilisateur place son doigt sur le capteur biométrique 40 avant la durée maximale T_OUT, le résultat d'un test D30 est positif. Le module 30 extrait alors les données biométriques au cours d'une étape D40. Elles sont communiquées au processeur cryptographique qui les vérifie en utilisant les données biométriques de référence BIO_REF. La transaction peut ensuite être rejetée ou continuer au cours d'une étape D50 selon le résultat de cette vérification.

Si l'utilisateur ne place pas son doigt sur le capteur biométrique 40 avant la durée maximale T_OUT, le résultat du test D30 est négatif. Le module 20 propose alors à l'utilisateur de saisir son code PIN au cours d'une étape D60 Le processeur cryptographique vérifie ce code PIN. La transaction peut ensuite être rejetée ou continuer au cours d'une étape D50 selon le résultat de cette vérification.

Si le code PIN n'est pas saisi, la transaction est rejetée (étape D70).

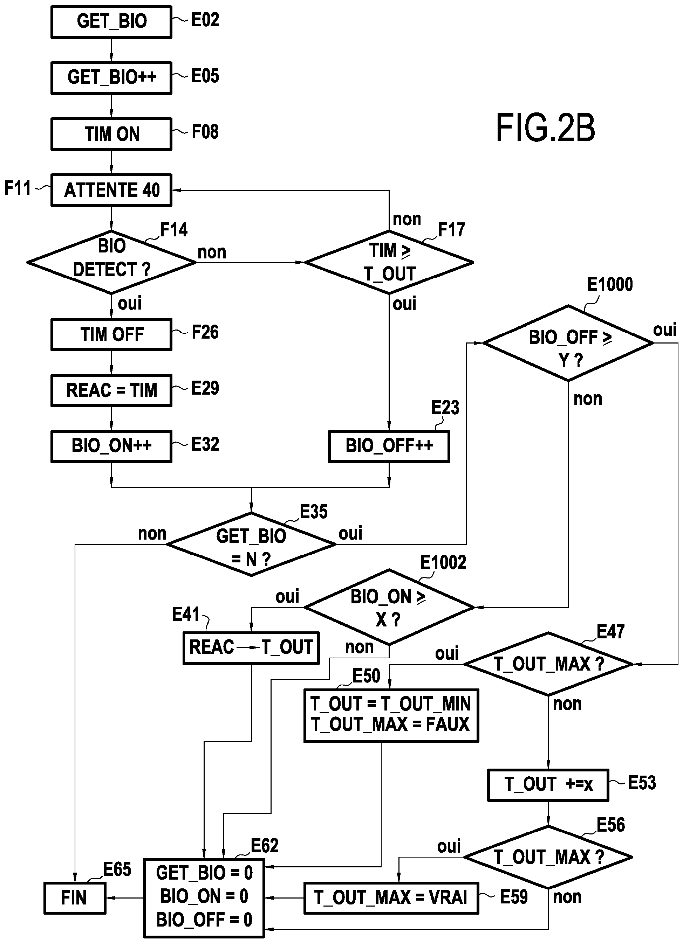

La figure 2B décrit un procédé d'ajustement de la durée maximale T_OUT d'attente d'acquisition de caractéristiques biométriques conforme à un deuxième mode particulier de réalisation de l'invention.

Les étapes Exx et Fxx qui sont identiques à celles du procédé selon le premier mode de réalisation décrit à la figure 2A gardent les mêmes références.

Comme dans le premier mode de réalisation, les étapes Exx sont exécutées par le processeur cryptographique 21 du module 20 et les étapes Fxx sont exécutées par le processeur 31 du module 30 d'extraction des données biométriques.

Comme dans le premier mode de réalisation, le processeur cryptographique 21 n'envisage d'ajuster la durée maximum d'attente T_OUT que tous les N demandes d'acquisitions de caractéristiques biométriques, cette variable d'ajustement N étant mémorisée dans la mémoire de stockage 23.

Par conséquent, au cours du test E35, le processeur cryptographique 21 vérifie si le compteur cyclique GET_BIO est égal à N. Si tel n'est pas le cas, le résultat du test E35 est négatif et le procédé se termine (étape E65).

Comme pour le premier mode de réalisation décrit à la figure 2A, l'ajustement de la durée maximum T_OUT est envisagé lorsque le résultat du test E35 est positif.

Dans ce deuxième mode de réalisation, le test E35 est alors suivi par un test E1000 au cours duquel le processeur cryptographique 21 détermine si le nombre BIO_OFF de non acquisitions de caractéristiques biométriques est supérieur ou égal à un nombre Y.

Si le nombre BIO_OFF de non acquisitions de caractéristiques biométriques est supérieur ou égal à ce nombre Y, le résultat du test E1000 est positif et ce test est suivi par le test E47 déjà décrit dans lequel le processeur cryptographique 21 vérifie si l'indicateur binaire TOUT_MAX? est positionné, autrement dit si la durée maximum d'attente T_OUT a atteint la durée limite T_OUT_MAX. Le procédé se déroule ensuite comme dans le premier mode de réalisation de la figure 2A.

Si le nombre BIO_OFF de non acquisitions de caractéristiques biométriques est inférieur à ce nombre Y, le résultat du test E1000 est négatif et ce test est suivi par un test E1002 dans lequel le processeur cryptographique 21 vérifie si le nombre BIO_ON d'acquisitions de caractéristiques biométriques est supérieur ou égal à un nombre X.

Si le nombre BIO_ON d'acquisitions de caractéristiques biométriques est supérieur ou égal à ce nombre X, le test E1002 est suivi par l'étape E41 déjà décrite au cours de laquelle une nouvelle durée maximum d'attente T_OUT est calculée ; le procédé se déroule ensuite comme dans le premier mode de réalisation de la figure 2A.

Si le nombre BIO_ON d'acquisitions de caractéristiques biométriques est inférieur au nombre X, les variables GET_BIO, BIO_ON et BIO_OFF sont réinitialisées (étape E62) et le procédé se termine (étape E65).

Dans un exemple particulier de mise en œuvre de ce mode de réalisation, on peut choisir N=10, X=8 et Y=4.

## Revendications

1. Procédé d'ajustement d'une durée maximale (T_OUT) d'attente d'acquisition de caractéristiques biométriques comportant :
- une étape (F08) de déclenchement d'une horloge sur réception (E02) d'une demande d'acquisition de caractéristiques biométriques ;
- une phase de collecte d'informations (BIO_ON, BIO_OFF, REAC) représentatives, soit :
(i) de la non-acquisition (BIO_OFF) de caractéristiques biométriques pendant une durée maximale (T_OUT) comptée à partir dudit déclenchement ; soit
(ii) de la durée (REAC) écoulée entre ledit déclenchement et l'acquisition (BIO_ON) de caractéristiques biométriques avant la durée maximale (T_OUT) ; et
- sur détection (E35) d'un critère d'ajustement, une étape (E41) d'ajustement de ladite durée maximale (T_OUT) en fonction desdites informations.

2. Procédé d'ajustement selon la revendication 1, **caractérisé en ce que** ledit critère d'ajustement est détecté (E35) toutes les N dites demandes d'acquisitions de caractéristiques biométriques, où N est un entier supérieur ou égal à 1.

3. Procédé selon la revendication 1 ou 2, **caractérisé en ce qu'**il comporte :
- une étape de comparaison, avec un premier seuil, d'un nombre (BIO_ON) d'acquisitions ou d'un nombre (BIO_OFF) de non acquisition de
caractéristiques biométriques en réponse à desdites demandes d'acquisitions de caractéristiques biométriques
et selon le résultat de la dite comparaison, une étape d'ajustement de ladite durée maximum d'attente (T_OUT) en fonction d'une durée déterminée ou desdites durées écoulées (REAC) ou desdits nombres (BIO_ON, BIO_OFF).

4. Procédé selon la revendication 3, **caractérisé en ce que** :
- si le nombre (BIO_ON) d'acquisitions de caractéristiques biométriques est supérieur ou égal au nombre (BIO_OFF) de non acquisitions de caractéristiques biométriques (BIO_OFF) en réponse auxdites demandes d'acquisitions de caractéristiques biométriques, ladite durée maximum d'attente (T_OUT) est ajustée en fonction desdites durées écoulées (REAC) ou diminuée d'une durée déterminée.

5. Procédé selon la revendication 3, **caractérisé en ce que** :
- si le nombre (BIO_ON) d'acquisitions de caractéristiques biométriques est inférieur au nombre (BIO_OFF) de non acquisitions de caractéristiques biométriques (BIO_OFF) en réponse à desdites demandes d'acquisitions de caractéristiques biométriques, ladite durée maximum d'attente (T_OUT) est augmentée d'une durée déterminée ou d'une durée proportionnelle au ratio du nombre de non acquisitions de caractéristiques biométriques (BIO_OFF) sur le nombre d'acquisitions de caractéristiques biométriques (BIO_ON).

6. Procédé selon la revendication 3, **caractérisé en ce que** :
- si le nombre (BIO_ON) d'acquisitions de caractéristiques biométriques est inférieur au nombre (BIO_OFF) de non acquisitions de caractéristiques biométriques (BIO_OFF) en réponse à desdites demandes d'acquisitions de caractéristiques biométriques, et si ladite durée maximum d'attente (T_OUT) est supérieure à une durée limite (T_OUT_MAX), ladite durée maximum d'attente (T_OUT) est réinitialisée à une durée déterminée (T_OUT_MIN).D

7. Dispositif (10) comportant :
- des moyens (31) de déclenchement d'une horloge (34) sur réception (E02) d'une demande d'acquisition de caractéristiques biométriques ;
- des moyens (30) de collecte d'informations (BIO_ON, BIO_OFF, REAC) représentatives, soit :
(i) de la non-acquisition (BIO_OFF) de caractéristiques biométriques pendant une durée maximale (T_OUT) comptée à partir dudit déclenchement ; soit
(ii) de la durée (REAC) écoulée entre ledit déclenchement et l'acquisition (BIO_ON) de caractéristiques biométriques avant ladite durée maximale (T_OUT) ;
- des moyens (21) de détection (E35) d'un critère d'ajustement ; et
- des moyens (21) d'ajustement de ladite durée maximale (T_OUT) en fonction desdites informations.

8. Dispositif électronique (10) selon la revendication 4 et constitué par une carte à circuit intégré, ledit dispositif comportant :
- un capteur biométrique (40) apte à acquérir une caractéristique biométrique;
- un module (30) pour extraire des données biométriques à partir de ladite caractéristique biométrique, ledit module (30) comportant lesdits moyens de collecte (31) ; et
- un élément sécurisé (20).

9. Dispositif selon la revendication 5 dans lequel ledit élément sécurisé comporte lesdits moyens (21) de détection (E35) du critère d'ajustement, lesdits moyens (21) d'ajustement de ladite durée maximale (T_OUT) et des moyens (21) d'envoi de ladite durée maximale (T_OUT) ajustée audit module (30).

10. Programme d'ordinateur sur un support d'information, ledit programme étant susceptible d'être mis en œuvre par un ordinateur, ce programme comportant des instructions adaptées à la mise en œuvre d'un procédé d'ajustement selon l'une quelconque des revendications 1 à 3.

11. Support d'enregistrement lisible par un ordinateur sur lequel est enregistré un programme d'ordinateur comprenant des instructions pour l'exécution des étapes du procédé d'ajustement selon l'une quelconque des revendications 1 à 3.
